# EUROPÄISCHE PATENTANMELDUNG

(11) **EP 3 553 562 A1**
(43) Veröffentlichungstag der Anmeldung: **16.10.2019**
(21) Anmeldenummer: 19159549.5
(22) Anmeldetag: 27.02.2019
(51) Int. Cl.: G01S 17/00, G01S 7/497, B60R 1/00, G01S 17/02, G01S 17/10, G01S 17/46, G01S 17/89

(54) **FUNKTIONALE SICHERHEIT FÜR EINE DREIDIMENSIONALE INNENRAUMKAMERA**

(30) Priorität: 29.03.2018 DE 102018204902
(71) Anmelder: ZF Friedrichshafen AG, 88046 Friedrichshafen (DE)
(72) Erfinder: Schaale, Christian, 88138 Weißensberg (DE)

(57) **Zusammenfassung**

Bildgebungssensor (10) für ein Landfahrzeug (1) zum Erhalten von Distanzinformationen, wobei der Bildgebungssensor (10) ausgeführt ist, erste (11) und zweite Signale (12) zu erfassen, wobei die ersten Signale (11) an mit Strahlpulsen (13) eines ersten Strahlers (21) beleuchteten Objekten (2) reflektierte Strahlenpulse (13) und die zweiten Signale (12) an den mit Strahlenmustern (15) eines zweiten Strahlers (22) beleuchteten Objekten (2) reflektierte Strahlenmuster (15) sind, mit einer Auswerteeinrichtung (30), die ausgeführt ist, in Abhängigkeit der ersten Signale (11) in einer ersten Distanzmessung eine erste Distanzinformation dieser Objekte (2) und in Abhängigkeit der zweiten Signale (12) in einer zweiten Distanzmessung eine zweite Distanzinformation dieser Objekte zu erhalten, und in Abhängigkeit eines Vergleichs der ersten und der zweiten Distanzinformation eine dritte Distanzinformation dieser Objekte (2) zu erhalten und einer Ausgabeschnittstelle (40), die ausgeführt ist, in Abhängigkeit der dritten Distanzinformation ein Bild dieser Objekte (2) bereitzustellen, wobei der Bildgebungssensor (10) derart ausgeführt ist, dass er durch die erste und die zweite Distanzmessung bei Ausfall einer dieser Distanzmessungen funktional gesichert ist. Ferner betrifft die Erfindung ein Bildgebungssystem (20) und dessen Verwendung, ein Umfelderfassungssystem (50) für ein Landfahrzeug (1) und ein Verfahren zur funktionalen Absicherung des erfindungsgemäßen Umfelderfassungssystems (50).

## Beschreibung

Die Erfindung betrifft einen Bildgebungssensor für ein Landfahrzeug zum Erhalten von Distanzinformationen nach Anspruch 1. Ferner betrifft die Erfindung ein Bildgebungssystem für ein Landfahrzeug zum Erhalten von Distanzinformationen nach Anspruch 6. Außerdem betrifft die Erfindung eine Verwendung eines erfindungsgemäßen Bildgebungssystems bei einem Umfelderfassungssystem eines Landfahrzeuges nach Anspruch 10. Des Weiteren betrifft die Erfindung ein Umfelderfassungssystem für ein Landfahrzeug nach Anspruch 11. Schließlich betrifft die Erfindung ein Verfahren zur funktionalen Absicherung eines Umfelderfassungssystems eines Landfahrzeuges nach Anspruch 13.

Aus dem Stand der Technik sind Innenraumkameras für Landfahrzeuge bekannt. Derartige Innenraumkameras stellen ein zwei- oder dreidimensionales Bild und/oder eine zeitliche Abfolge derartiger Bilder des Fahrzeuginnenraums bereit. Insbesondere stellen Innenraumkameras derartige Bilder und/oder Abfolgen von Bildern von Personen, die in dem Innenraum des Landfahrzeuges angeordnet sind, bereit, insbesondere von einem Fahrzeugführer, einem Beifahrer und/oder einem weiteren Fahrgast. Eine bekannte Art von Innenraumkameras sind sogenannte Time-Of-Flight-Kameras, die basierend auf einer Lichtlaufzeit zwischen der Kamera und einem Objekt eine Distanz des Objekts zu der Kamera berechnen.

Die WO 2014/195020 A1 offenbart ein bildgebendes System mit einem Time-Of-Flight Bildgebungssensor, wobei das System ausgeführt ist, ein Bild einer Szene zu erhalten, wobei die Szene mit wenigstens zwei unterschiedlichen Beleuchtungsquellen beleuchtet wurde.

Im Automotive-Bereich müssen Innenraumkameras den Spezifikationen der Norm ISO 26262 "Road vehicles - Functional safety" genügen, um gegen Ausfälle abgesichert zu sein.

Hier setzt die Erfindung an. Der Erfindung hat die Aufgabe zugrunde gelegen, eine Innenraumkamera für ein Landfahrzeug mit verbesserter funktionaler Sicherheit bereitzustellen.

Die Aufgabe wird gelöst mit einem Bildgebungssensor für ein Landfahrzeug zum Erhalten von Distanzinformationen mit den Merkmalen des Anspruchs 1. Außerdem wird die Aufgabe gelöst mit einem Bildgebungssystem für ein Landfahrzeug zum Erhalten von Distanzinformationen mit den Merkmalen des Anspruchs 6. Ferner wird die Aufgabe gelöst durch eine Verwendung eines erfindungsgemäßen Bildgebungssystems nach Anspruch 10. Des Weiteren wird die Aufgabe gelöst mit einem Umfelderfassungssystem für ein Landfahrzeug mit den Merkmalen des Anspruchs 11. Außerdem wird die Aufgabe gelöst durch ein Verfahren zur funktionalen Absicherung eines Umfelderfassungssystems eines Landfahrzeuges mit den Merkmalen des Anspruchs 13.

Der erfindungsgemäße Bildgebungssensor für ein Landfahrzeug zum Erhalten von Distanzinformationen ist ausgeführt, erste und zweite Signale zu erfassen. Die ersten Signale sind an mit Strahlpulsen eines ersten Strahlers beleuchteten Objekten reflektierte Strahlenpulse. Die zweiten Signale sind an den mit Strahlenmustern eines zweiten Strahlers beleuchteten Objekten reflektierte Strahlenmuster. Der Bildgebungssensor weist eine Auswerteeinrichtung auf. Die Auswerteeinrichtung ist ausgeführt, in Abhängigkeit der ersten Signale in einer ersten Distanzmessung eine erste Distanzinformation dieser Objekte zu erhalten. Ferner ist die Auswerteeinrichtung ausgeführt, in Abhängigkeit der zweiten Signale in einer zweiten Distanzmessung eine zweite Distanzinformation dieser Objekte zu erhalten. Des Weiteren ist die Auswerteeinrichtung ausgeführt, in Abhängigkeit eines Vergleichs der ersten und der zweiten Distanzinformation eine dritte Distanzinformation dieser Objekte zu erhalten. Außerdem weist der Bildgebungssensor eine Ausgabeschnittstelle auf, die ausgeführt ist, in Abhängigkeit der dritten Distanzinformation ein Bild dieser Objekte bereitzustellen. Der Bildgebungssensor ist derart ausgeführt ist, dass er durch die erste und die zweite Distanzmessung bei Ausfall einer dieser Distanzmessungen funktional gesichert ist.

Die nachfolgenden Definitionen gelten für den gesamten Gegenstand der Erfindung.

Ein Bildgebungssensor ist ein Sensor, der aus eingehenden Signalen, vorzugsweise einfallendem Licht, ein Bild erzeugt. Ein Bildgebungssensor einer Digitalkamera erzeugt aus dem auf den Sensor einfallenden Licht ein zweidimensionales Abbild der aufgenommenen Szene.

Ein Strahler ist eine Vorrichtung, die Strahlen, beispielsweise Licht, vorzugsweise in Form von Strahlenbündeln, bereitstellt. Ein Strahlenbündel ist eine Anzahl von Strahlen, wobei die Strahlen zueinander ausgerichtet sind, vorzugsweise annähernd parallel zueinander verlaufen. Mit den Strahlen beleuchtet der Strahler Objekte. Ein Projektor ist ein Strahler.

Ein Strahlenpuls ist ein Strahl, der in einer zeitlich endlichen Zeitspanne existiert. Diese Zeitspanne kann sich wiederholen, vorzugsweise periodisch. Abhängig von einer jeweiligen Anwendung reichen die Zeitspannen von der Größenordnung Nanosekunden bis zur Größenordnung von Attosekunden. Ein zeitcodiertes Signal, das eine zeitliche Impulsfolge aufweist, ist ein Strahlenpuls.

Ein Strahlenmuster ist eine geometrische Form der Beleuchtung, die mit diesen Strahlen durch einen entsprechenden Strahler, der diese Muster erzeugt, erreicht wird. Muster sind zum Beispiel geometrische Formen wie beispielsweise Linien oder Kreise. Muster bedeutet auch eine Sequenz derartiger Formen. Die Muster werden durch Raumcodierungen von Signalen erreicht. Eine Ausleuchtung mit Strahlenmustern wird im Englischen als structured lighting bezeichnet.

Als Strahlen dienen insbesondere Lichtstrahlen im Infrarotwellenlängenbereich.

Eine Auswerteeinrichtung ist eine Vorrichtung, die eingehende Informationen verarbeitet und ein aus dieser Verarbeitung resultierendes Ergebnis ausgibt. Insbesondere ist eine Auswerteeinrichtung eine elektronische Schaltung, wie zum Beispiel eine zentrale Prozessoreinheit oder ein Grafikprozessor.

Die erste Distanzmessung ist eine Laufzeitmessung. In der ersten Distanzmessung erfasst die Auswerteeinrichtung die Zeit, die der Strahlenpuls benötigt, um von dem ersten Strahler das Objekt zu erreichen, und von dem Objekt als reflektierter Strahlenpuls die Auswerteeinrichtung zu erreichen. Anhand dieser Laufzeit ergibt sich unter Kenntnis der Ausbreitungsgeschwindigkeit des Strahlenpulses die Distanz des Objekts zu der Auswerteeinrichtung.

Die zweite Distanzmessung ist eine geometrische Messung und vorzugsweise redundant zu der ersten Distanzmessung. In der zweiten Distanzmessung erfasst die Auswerteeinrichtung eine geometrische Änderung des an einem Objekt reflektierten Strahlenmusters im Vergleich zu dem mit dem zweiten Strahler gesendeten Strahlenmusters. In Abhängigkeit der Ausdehnung und Entfernung des Objekts erscheinen Muster von reflektierten Strahlenmustern im Vergleich zu Mustern von gesendeten Strahlenmustern verzerrt. Zum Beispiel erscheinen Punkte eines gesendeten Punktemusters auf einer entfernten gekrümmten Oberfläche verzerrt im Vergleich zu einer nahen ebenen Oberfläche. Das heißt, in Abhängigkeit dieser geometrischen Änderung wird die Entfernung zu dem Objekt bestimmt.

Eine Schnittstelle ist eine Einrichtung zwischen wenigstens zwei Funktionseinheiten, an der ein Austausch von logischen Größen, zum Beispiel Daten, oder physikalischen Größen, zum Beispiel elektrischen Signalen, erfolgt, entweder nur unidirektional oder bidirektional. Der Austausch kann analog oder digital erfolgen. Der Austausch kann drahtlos oder drahtgebunden erfolgen.

Das Bild, das von der Ausgabeschnittstelle bereitgestellt wird, ist ein dreidimensionales Bild, in dem die Objekte dreidimensional dargestellt sind. Dabei ist die Distanz einzelner Objektpunkte vorzugsweise in Abhängigkeit von Graustufen dargestellt.

In einem normalen, das heißt fehlerfreien Betrieb, führt ein Bauteil eines Systems eine sicherheitsrelevante Funktion korrekt aus. Funktionale Sicherheit bedeutet, dass bei Ausfall des Bauteiles das System sicher beherrscht wird, insbesondere entweder durch Übergang in einen vorab definierten sicheren Zustand oder durch Aktivierung eines weiteren Bauteiles, das die Funktion des ausgefallenen Bauteils übernimmt. Systeme mit funktionaler Sicherheit weisen eine niedrige Ausfallwahrscheinlichkeit auf. Besonders im Automotive-Bereich werden entsprechend der Norm ISO 26262 verschiedene Sicherheitsstufen unterschieden, die sich anhand einer empfohlenen oder geforderten Ausfallwahrscheinlichkeit unterscheiden. Diese Stufen heißen ASIL, im Englischen Automotive Safety Integrity Level, Stufen. ASIL A empfiehlt, dass innerhalb von 10⁹ Betriebsstunden weniger als 1000 Ausfälle auftreten. ASIL B empfiehlt, dass innerhalb von 10⁹ Betriebsstunden weniger als 100 Ausfälle auftreten. ASIL C fordert, dass innerhalb von 10⁹ Betriebsstunden weniger als 100 Ausfälle auftreten. ASIL D fordert, dass innerhalb von 10⁹ Betriebsstunden weniger als 10 Ausfälle auftreten. Beispielsweise wird für ein eine Funktion ausführendes Bauteil, bei dem ein Funktionsausfall zu schwersten Verletzungen des Nutzers führt und ein Überleben des Nutzers unwahrscheinlich macht, wobei der Funktionsausfall ständig auftreten kann, das heißt eine hohe Eintrittswahrscheinlichkeit aufweist, zum Beispiel beim Beschleunigen, Bremsen oder Lenken, und nur schwierig beherrschbar ist, ASIL D gefordert.

Stimmt die erste Distanzinformation mit der zweiten Distanzinformation überein, dann ist die dritte Distanzinformation gleich der ersten gleich der zweiten Distanzinformation. Ist ein Fehler bei der ersten Distanzinformation aufgetreten, das heißt, ist ein Ergebnis der ersten Distanzmessung null und ein Ergebnis der zweiten Distanzmessung verschieden von null, dann ist die dritte Distanzinformation gleich der zweiten Distanzinformation. Ist ein Fehler in der zweiten Distanzmessung aufgetreten, das heißt, ist das Ergebnis der zweiten Distanzinformation 0 und das Ergebnis der ersten Distanzinformation verschieden von 0, dann ist die dritte Distanzinformation gleich der ersten Distanzinformation. Durch diese Redundanz in der Distanzmessung ist der Bildgebungssensor funktional gesichert. Außerdem kann ein Ergebnis der ersten Distanzmessung mit einem Ergebnis der zweiten Distanzmessung verglichen werden zur Erhöhung der Genauigkeit des Ergebnisses.

In einer bevorzugten Ausführungsform der Erfindung ist der Bildgebungssensor ein Laufzeitverfahrenssensor, im Englischen als Time-Of-Flight Sensor bezeichnet. Bei einem Time-Of-Flight Sensor sammelt jeder Pixel des Sensors einfallendes Licht und misst zugleich die Laufzeit, die das Licht benötigt, um von einer Quelle zu dem Objekt und von dem Objekt zurück zum Pixel zu gelangen. Jeder der Pixel der Time-Of-Flight Sensoren wandelt Licht in einen elektrischen Strom um. Der Pixel arbeitet mit mehreren Schaltern und jeweils einem Schalter zugeordnetem Speicherelement. Im einfachsten Fall weist jeder Pixel zwei Schalter und zwei Speicherelemente auf. Die Schalter werden mit Aussenden des Strahlenpulses angesteuert und für die Zeitspanne des Strahlenpulses, das heißt die Pulslänge, geöffnet. Dabei sind die Steuersignale der jeweiligen Schalter jeweils um eine Pulslänge zeitlich verschoben. Wenn ein reflektierter Strahlenpuls verzögert auf den Pixel auftrifft, gelangt nur ein Teil des Strahlenpulses in das erste Speicherelement, der andere Teil wird im zweiten Speicherelement gesammelt. Je nach Distanz verändert sich damit das Verhältnis von gesammeltem Licht im ersten zu gesammelten Licht im zweiten Speicherelement. Durch Auslesen der Pixel und Bestimmen des Verhältnisses der Signale im ersten und im zweiten Speicherelement folgt dann die Entfernung des aufgenommenen Objekts. Die Funktionsweise eines Time-Of-Flight Sensors ist zum Beispiel in WO 2014/195020 A1 offenbart.

Bei dem Gegenstand der WO 2014/195020 A1 wird nur eine Distanzmessung mit Licht einer Beleuchtungsquelle erhalten. Das Licht der zweiten Beleuchtungsquelle dient dort lediglich der Verbesserung der Auflösung. Der Vorteil des erfindungsgemäßen Bildgebungssensors ist, dass mit einem Bildgebungssensor zwei voneinander unabhängige Distanzmessungen ausgeführt werden und anhand dieser Distanzmessungen auch bei Ausfall einer Distanzmessung stets eine resultierende Distanzmessung erhalten ist. Das heißt, der Bildgebungssensor ist gegen Ausfall einer der Distanzmessungen funktional abgesichert.

In einer Weiterbildung der Erfindung ist die Auswerteeinrichtung ausgeführt, Farbbilddaten dieser Objekte zu erhalten und in Abhängigkeit dieser Farbbilddaten und der dritten Distanzinformation ein dreidimensionales Farbbild dieser Objekte zu erhalten, wobei die Ausgabeschnittstelle ausgeführt ist, dieses Farbbild bereitzustellen. Damit wird insbesondere ein Time-Of-Flight Sensor bereitgestellt, der ein dreidimensionales farbiges Bild mit Distanzinformationen liefert. Außerdem können zweidimensionale Bilddaten eines gewöhnlichen zweidimensionalen Bildgebungssensors mit den zweidimensionalen Daten des erfindungsgemäßen Bildgebungssensors abgeglichen werden, um die funktionale Sicherheit des Bildgebungssensors zu erhöhen.

Vorteilhafterweise ist die Auswerteeinrichtung ausgeführt, einen Vergleich der ersten und/oder der zweiten Signale mit den Farbbilddaten durchzuführen. Dieser Vergleich verbessert die funktionale Sicherheit.

Vorzugsweise ist der Bildgebungssensor ein Bildgebungssensor einer Innenraumkamera des Landfahrzeuges und/oder die Ausgabeschnittstelle eine Mensch-Maschinen-Schnittstelle, im Englischen als Human Machine Interface bezeichnet, vorzugsweise in Form eines Bildschirms eines Infotainmentsystems des Landfahrzeuges. Insbesondere für Innenraumkameras, die weitere sicherheitsrelevante Vorrichtungen in einem Fahrzeug in Abhängigkeit der aufgenommen Fahrzeuginsassen steuern, ist ein erfindungsgemäßer Bildgebungssensor vorteilhaft. Derartige Innenraumkameras müssen nämlich funktional abgesichert sein.

Das erfindungsgemäße Bildgebungssystem für ein Landfahrzeug zum Erhalten von Distanzinformationen weist einen ersten Strahler auf. Der erste Strahler ist ausgeführt, Objekte mit Strahlenpulsen zu beleuchten. Das Bildgebungssystem weist auch einen zweiten Strahler auf. Der zweite Strahler ist ausgeführt, die Objekte mit Strahlenmustern zu beleuchten. Ferner weist das Bildgebungssystem einen Bildgebungssensor auf. Der Bildgebungssensor ist ausgeführt, erste und zweite Signale zu erfassen. Dabei sind die ersten Signale an den mit dem Strahlenpulsen beleuchteten Objekten reflektierte Strahlenpulse. Die zweiten Signale sind an den mit den Strahlenmustern beleuchteten Objekten reflektierte Strahlenmuster. Außerdem weist das Bildgebungssystem eine Auswerteeinrichtung auf. Die Auswerteeinrichtung ist ausgeführt, in Abhängigkeit der ersten Signale in einer ersten Distanzmessung eine erste Distanzinformation der Objekte zu erhalten. Außerdem ist die Auswerteeinrichtung ausgeführt, in Abhängigkeit der zweiten Signale in einer zweiten Distanzmessung eine zweite Distanzinformation der Objekte zu erhalten. Des Weiteren ist die Auswerteeinrichtung ausgeführt, in Abhängigkeit eines Vergleichs der ersten und der zweiten Distanzmessung eine dritte Distanzinformation der Objekte zu erhalten. Außerdem weist das Bildgebungssystem eine Ausgabeschnittstelle auf. Die Ausgabeschnittstelle ist ausgeführt, in Abhängigkeit der dritten Distanzinformation ein Bild dieser Objekte bereitzustellen. Das Bildgebungssystem ist derart ausgeführt ist, dass es durch die erste und die zweite Distanzmessung bei Ausfall einer dieser Distanzmessungen funktional gesichert ist.

Mit dem Bildgebungssystem wird ein vollständiges System zur Bildgebung bereitgestellt, das die Vorteile des erfindungsgemäßen Bildgebungssensors aufweist.

Vorzugsweise weist das Bildgebungssystem eine Optikeinrichtung auf, die ausgeführt ist, an diesen Objekten reflektierte Strahlen auf dem Bildgebungssensor abzubilden.

Eine Optikeinrichtung ist ein optisches System, das reflektierte Strahlen auf einer Oberfläche eines Bildgebungssensors des Bildgebungssystems sammelt.

Vorzugsweise weist die Optikeinrichtung einen optischen Bandpassfilter auf, der nur die Wellenlängen durchlässt, mit der auch die Beleuchtung arbeitet. Damit wird ein großer Teil des störenden Hintergrundlichts eliminiert.

Im Rahmen der Erfindung wird störendes Hintergrundlicht auch mittels der ersten und der zweiten Signale des Bildgebungssensors eliminiert. Das störende Hintergrundlicht erscheint sowohl im ersten Signal und im zweiten Signal und kann einfach subtrahiert werden.

In einer bevorzugten Ausgestaltung der Erfindung sind der Bildgebungssensor und/oder die Optikeinrichtung durch die erste und die zweite Distanzmessung, und/oder vorzugsweise durch einen Vergleich der ersten und/oder der zweiten Signale mit Farbbildern dieser Objekte funktional abgesichert. Vorzugsweise ist eine Ausfallrate des Bildgebungssystems kleiner als 100 Ausfälle pro 10⁹ Betriebsstunden des Betriebssystems. Damit ist für das Bildgebungssystem ein ASIL B Level erreicht.

Die Farbbilder werden mit der Optikeinrichtung des Bildgebungssystems erhalten, damit weist das Bildgebungssystem nur einen optischen Pfad auf, der gemäß der Erfindung funktional gesichert ist. Die Farbbilder können auch mit einer zweiten Optikeinrichtung erhalten werden.

Vorzugsweise ist der Bildgebungssensor ein erfindungsgemäßer Bildgebungssensor.

Erfindungsgemäß ist auch eine Verwendung eines erfindungsgemäßen Bildgebungssystems bei einem Umfelderfassungssystem, vorzugsweise einer Innenraumkamera, eines Landfahrzeuges.

Ein Umfelderfassungssystem ist ein System, das das Umfeld eines Fahrzeuges erfasst und die Erfassung für einen Fahrer des Landfahrzeuges bereitstellt, insbesondere im Rahmen von Assistieren von Fahraufgaben oder auch bei einem automatisierten Fahrbetrieb. Umfelderfassungssysteme sind zum Beispiel Außenraumkameras mit entsprechender Fusion der gesammelten Kameradaten und einer davon abhängigen Ansteuerung von Fahrzeugaktuatoren.

Vorteilhafterweise ist ein Bildgebungssensor des Umfelderfassungssystems ein erfindungsgemäßer Bildgebungssensor oder ein Bildgebungssystem des Umfelderfassungssystems ein erfindungsgemäßes Bildgebungssystem.

Besonders bevorzugt ist das Umfelderfassungssystem eine Innenraumkamera.

Das erfindungsgemäße Verfahren zur funktionalen Absicherung eines Umfelderfassungssystems eines Landfahrzeuges weist die folgenden Verfahrensschritte auf:
- Beleuchten von Objekten mit Strahlenpulsen und Erhalten von an den Objekten reflektierten Strahlenpulsen,
- Beleuchten von Objekten mit Strahlenmustern und Erhalten von an den Objekten reflektierten Strahlenmustern,
- in einer ersten Distanzmessung Messung von Laufzeiten der Strahlenpulse und Erhalten einer ersten Distanzinformation dieser Objekte in Abhängigkeit der Laufzeiten,
- in einer zweiten Distanzmessung Messen von Reflexionsmustern der Strahlenmuster und Erhalten einer zweiten Distanzinformation dieser Objekte in Abhängigkeit der Reflexionsmuster,
- Vergleichen der ersten und der zweiten Distanzinformation und in Abhängigkeit des Vergleichs Erhalten einer dritten Distanzinformation dieser Objekte und
- in Abhängigkeit der dritten Distanzinformation Bereitstellen eines Bildes dieser Objekte, wobei durch die erste und die zweite Distanzmessung bei Ausfall einer dieser Distanzmessungen das Umfelderfassungssystem funktional gesichert ist.

Damit wird neben einer Vorrichtung zur funktionalen Absicherung vorteilhafterweise auch ein entsprechendes Verfahren bereitgestellt.

Bevorzugt werden Farbbilder dieser Objekte erhalten und diese Farbbilddaten mit den an diesen Objekten reflektierten Strahlen verglichen zur Erhöhung der funktionalen Sicherheit des Umfelderfassungssystems.

Besonders bevorzugt wird zur Durchführung des Verfahrens ein erfindungsgemäßer Bildgebungssensor oder ein erfindungsgemäßes Bildgebungssystem verwendet.

Ein erfindungsgemäßes Computerprogrammprodukt ist ausgeführt, in einen Speicher eines Computers geladen zu werden und umfasst Softwarecodeabschnitte, mit denen das erfindungsgemäße Verfahren ausgeführt werden kann, wenn das Computerprogramm in dem Computer läuft. Vorzugsweise wird das Computerprogrammprodukt in einen Speicher des Bildgebungssensors oder des Bildgebungssystems geladen.

Die Erfindung wird anhand der nachfolgenden Figuren ausführlich beschrieben. Es zeigen:
- Fig. 1: ein Ausführungsbeispiel einer erfindungsgemäßen Innenraumkamera in einem Landfahrzeug,
- Fig. 2: ein Ausführungsbeispiel eines erfindungsgemäßen Bildgebungssensors,
- Fig. 3: ein Ausführungsbeispiel eines erfindungsgemäßen Bildgebungssystems und
- Fig. 4: eine schematische Darstellung des erfindungsgemäßen Verfahrens.

In den Figuren bezeichnen gleiche Bezugszeichen gleiche Bezugsteile. In den entsprechenden Figuren werden die jeweils relevanten Bezugsteile beziffert.

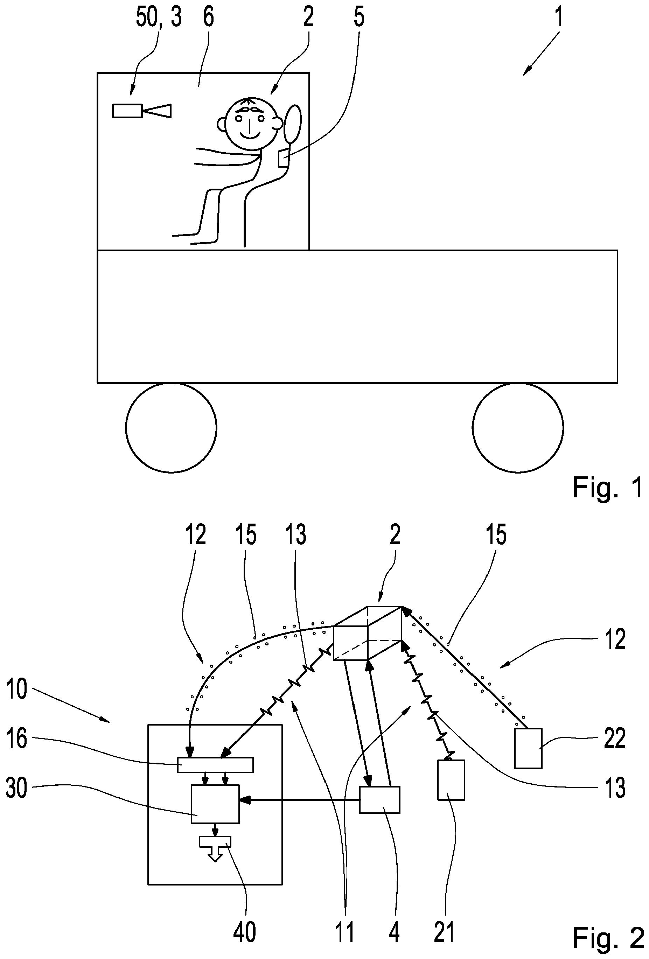

Fig. 1 zeigt als ein Landfahrzeug 1 einen Pkw. In einem Innenraum 6 des Landfahrzeuges 1 ist auf einem Fahrersitz als ein Objekt 2 ein Fahrzeuginsasse angeordnet. Der Fahrzeuginsasse ist zum Beispiel der Fahrzeugführer. Der Fahrzeuginsasse kann aber auch ein Beifahrer sein. Fahrzeuginsassen sind auch Fahrgäste, z.B. Kinder, auf der Rückbank.

In dem Innenraum 6 ist als Umfelderfassungssystem 50 eine Innenraumkamera 3 angeordnet. Die Innenraumkamera 3 ist derart ausgeführt, dass sie den gesamten Innenraum 6 erfasst. Vorzugsweise weist dafür die Innenraumkamera ein Weitwinkelobjektiv als eine Optikeinrichtung 23 auf. Das Umfelderfassungssystem 50 kann mit weiteren Fahrerassistenzsystemen und Fahrzeugaktuatoren verbunden sein. Insbesondere werden dabei die von den von den einzelnen Fahrerassistenzsystemen gesammelten Daten miteinander fusioniert. Die Innenraumkamera 3 erfasst das Objekt 2 und eine Anordnung eines Sicherheitsgurtes 5. Die Innenraumkamera 3 ist insbesondere mit einer Airbagansteuerung verbunden. Erkennt zum Beispiel die Innenraumkamera 3, dass der Fahrzeugführer entgegen der Fahrrichtung sitzt, das heißt mit seinem Gesicht und Oberkörper entgegen der Fahrtrichtung zur Rückbank hinweisend angeordnet ist, dann steuert die Innenraumkamera 3 die Airbagansteuerung für den Fahrzeugführer derart an, dass ein Airbag nicht ausgelöst wird. Die Innenraumkamera 3 schaltet die Airbagansteuerung für den Fahrzeugführer nur dann in einen aktiven Zustand, wenn die Innenraumkamera 3 erkannt hat, dass der Fahrzeugführer in Fahrrichtung sitzend angeordnet ist.

Fig. 2 zeigt einen Bildgebungssensor 10. Eine Pixelanordnung 16 des Bildgebungssensors 10 erhält von an dem Objekt 2 reflektierte erste Signale 11 und zweite Signale 12. Das Objekt 2 wird mit Strahlenpulsen 13 eines ersten Strahlers 21 beleuchtet. Außerdem wird das Objekt 2 mit Strahlenmustern 15 eines zweiten Strahlers 22 beleuchtet. Ein einzelner Strahlenpuls der Strahlenpulse 13 hat eine Zeitdauer von vorzugsweise unterhalb von 50 ns, insbesondere eine Zeitdauer von 10 ns. Das Strahlenmuster 15 ist eine Anordnung von Lichtpunkten. Die Pixelanordnung 16 ist eine zweidimensionale Anordnung von Pixeln. Der Bildgebungssensor 10 hat zum Beispiel eine quadratische Form mit einer Kantenlänge von 45 µm. Dabei hat die Pixelanordnung 16 vorzugsweise 200 x 200 Pixel.

Aus den mit der Pixelanordnung 16 erhaltenen Signalen erhält eine Auswerteeinrichtung 30 in einer ersten Distanzmessung eine erste Distanzinformation des beleuchteten Objekts 2. Die erste Distanzmessung ist eine Messung von Laufzeiten der Strahlenpulse 13. In der ersten Distanzmessung wird eine Distanzinformation dieser Objekte in Abhängigkeit der Laufzeiten erhalten.

In einer zweiten Distanzmessung erhält die Auswerteeinrichtung eine zweite Distanzinformation des beleuchteten Objekts 2. Die zweite Distanzmessung misst Reflexionsmuster der Strahlenmuster 15 und erhält eine zweite Distanzinformation des beleuchteten Objekts in Abhängigkeit der Reflexionsmuster. Zusätzlich werden die Signale, die die Auswerteeinrichtung 30 von der Pixelanordnung 16 erhält, mit Signalen eines 2D-Bildgebungssensors 4 fusioniert. Bei dem 2D-Bildgebungssensor 2 handelt es sich um einen hochauflösenden zweidimensionalen Bildgebungssensor. Die Auswerteeinrichtung 30 fusioniert also die Signale, die mit der Pixelanordnung 16 erhalten werden, mit Farbbilddaten des 2D-Bildgebungssensors 14 und erhält ein hochaufgelöstes dreidimensionales Bild mit Farbinformationen. Dieses Bild wird in Abhängigkeit der dritten Distanzinformation, die die Auswerteeinrichtung 30 aus einem Vergleich der ersten Distanzinformation mit der zweiten Distanzinformation erhält, über eine Ausgabeschnittstelle 40 bereitgestellt.

Der 2D-Bildgebungssensors 14 ist weist vorzugsweise dieselbe Optikeinrichtung 23 wie das Bildgebungssystem 20 auf, ist also in dem optischen Pfad des Bildgebungssensors 10 angeordnet. Alternativ weist der 2D-Bildgebungssensors 14 eine eigene Optikeinrichtung 23 auf.

Die Ausgabeschnittstelle 40 ist eine Human Machine Interface in Form eines Bildschirms eines Infotainmentsystems des Landfahrzeuges.

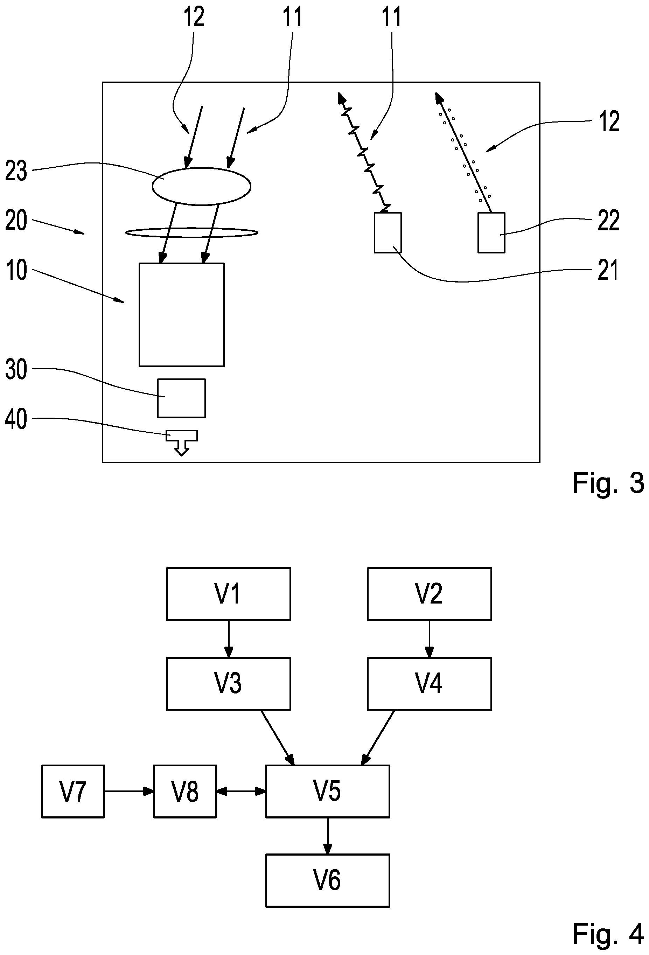

Fig. 3 zeigt ein Bildgebungssystem 20. Das Bildgebungssystem 20 weist einen ersten Strahler 21 und einen zweiten Strahler 22 auf. Der erste Strahler 21 beleuchtet Objekte mit ersten Signalen 11. Die ersten Signale 11 sind Strahlenpulse mit bestimmter Pulslänge. Der zweite Strahler 22 beleuchtet Objekte 2 mit Strahlenmustern mittels eines zweiten Signals 12.

Das Bildgebungssystem 20 weist des Weiteren eine Optikeinrichtung 23 auf. Die Optikeinrichtung 23 ist ein System aus optischen Sammel- und/oder Zerstreuungslinsen.

Ferner weist das Bildgebungssystem 20 eine Auswerteeinrichtung 30 und eine Ausgabeschnittstelle 40 auf. Der Bildgebungssensor 10 ist vorzugsweise ein erfindungsgemäßer Bildgebungssensor 10. Die Ausgabeschnittstelle 40 stellt in Abhängigkeit der mit der Auswerteeinrichtung 30 erhaltenen dritten Distanzinformation aus einem Vergleich der ersten Distanzinformation mit der zweiten Distanzinformation ein Bild des Objekts 2 bereit.

Fig. 4 zeigt ein Verfahren zur funktionalen Absicherung eines Umfelderfassungssystems 50. Dabei werden Objekte 2 in einem ersten Verfahrensschritt V1 mit Strahlenpulsen 13 beleuchtet. Es werden an den Objekten 2 reflektierte Strahlenpulse 13 erhalten. In einem zweiten Verfahrensschritt V2 werden die Objekte 2 mit Strahlenmustern 15 beleuchtet. Es werden an den Objekten reflektierte Strahlenmuster 15 erhalten. Die Verfahrensschritte V1 und V2 erfolgen zeitlich nacheinander oder zeitlich parallel. In einer ersten Distanzmessung werden Laufzeiten der Strahlenpulse gemessen und in einem Verfahrensschritt V3 eine erste Distanzinformation des Objekts 2 in Abhängigkeit der Laufzeiten erhalten. In einer zweiten Distanzmessung werden Reflexionsmuster der Strahlenmuster gemessen und in einem Verfahrensschritt V4 eine zweite Distanzinformation des Objekts 2 in Abhängigkeit der Reflexionsmuster erhalten. In einem Verfahrensschritt V5 werden die ersten und die zweiten Distanzinformationen miteinander verglichen und in Abhängigkeit des Vergleichs eine dritte Distanzinformation des Objekts 2 erhalten. In Abhängigkeit der dritten Distanzinformation wird ein Bild des Objekts 2 in dem Verfahrensschritt V6 bereitgestellt. Parallel zu dem Vergleich der ersten und der zweiten Distanzinformation werden in einem Verfahrensschritt V7 Farbbilder der Objekte 2 erhalten. Diese Farbbilder werden in einem Verfahrensschritt V8 mit an den Objekten 2 reflektierten Strahlen verglichen.

Für die funktionale Sicherheit des Umfelderfassungssystems 50 werden die Daten des 2D-Bildgebungssensors mit den zweidimensionalen Bildinformationen des Bildgebungssensors 10 verglichen. Der Bildgebungssensor 10 ist vorzugsweise ein Time-Of-Flight Sensor.

### Bezugszeichen

- 1: Landfahrzeug
- 2: Objekt
- 3: Innenraumkamera
- 4: 2D-Bildgebungssensor
- 5: Sicherheitsgurt
- 6: Innnenraum
- 10: Bildgebungssensor
- 11: erstes Signal
- 12: zweites Signal
- 13: Strahlenpuls
- 15: Strahlenmuster
- 16: Pixelanordnung
- 20: Bildgebungssystem
- 21: erster Strahler
- 22: zweiter Strahler
- 23: Optikeinrichtung
- 30: Auswerteeinrichtung
- 40: Ausgabeschnittstelle
- 50: Umfelderfassungssystem
- V1-V8: Verfahrensschritte

## Patentansprüche

1. Bildgebungssensor (10) für ein Landfahrzeug (1) zum Erhalten von Distanzinformationen, wobei
• der Bildgebungssensor (10) ausgeführt ist, erste (11) und zweite Signale (12) zu erfassen, wobei
o die ersten Signale (11) an mit Strahlenpulsen (13) eines ersten Strahlers (21) beleuchteten Objekten (2) reflektierte Strahlenpulse (13) und
o die zweiten Signale (12) an den mit Strahlenmustern (15) eines zweiten Strahlers (22) beleuchteten Objekten (2) reflektierte Strahlenmuster (15) sind,
mit einer Auswerteeinrichtung (30), die ausgeführt ist,
• in Abhängigkeit der ersten Signale (11) in einer ersten Distanzmessung eine erste Distanzinformation dieser Objekte (2) und
• in Abhängigkeit der zweiten Signale (12) in einer zweiten Distanzmessung eine zweite Distanzinformation dieser Objekte zu erhalten, und
• in Abhängigkeit eines Vergleichs der ersten und der zweiten Distanzinformation eine dritte Distanzinformation dieser Objekte (2) zu erhalten
und einer Ausgabeschnittstelle (40), die ausgeführt ist, in Abhängigkeit der dritten Distanzinformation ein Bild dieser Objekte (2) bereitzustellen,
wobei der Bildgebungssensor (10) derart ausgeführt ist, dass er durch die erste und die zweite Distanzmessung bei Ausfall einer dieser Distanzmessungen funktional gesichert ist.

2. Bildgebungssensor (10) nach Anspruch 1, **dadurch gekennzeichnet, dass** der Bildgebungssensor (10) ein Laufzeitverfahrenssensor ist.

3. Bildgebungssensor (10) nach Anspruch 1 oder 2, **dadurch gekennzeichnet, dass** die Auswerteeinrichtung (30) ausgeführt ist, Farbbilddaten dieser Objekte (2) zu erhalten und in Abhängigkeit dieser Farbbilddaten und der dritten Distanzinformation ein dreidimensionales Farbbild dieser Objekte (2) zu erhalten, wobei die Ausgabeschnittstelle (40) ausgeführt ist, dieses Farbbild bereitzustellen.

4. Bildgebungssensor (10) nach Anspruch 3, **dadurch gekennzeichnet, dass** die Auswerteeinrichtung (30) ausgeführt ist, einen Vergleich der ersten (11) und/oder der zweiten Signale (12) mit den Farbbilddaten durchzuführen.

5. Bildgebungssensor (10) nach einem der Ansprüche 1 bis 4, **dadurch gekennzeichnet, dass** der Bildgebungssensor (10) ein Bildgebungssensor (10) einer Innenraumkamera (3) des Landfahrzeuges (1) ist und/oder die Ausgabeschnittstelle (40) eine Mensch-Maschinen-Schnittstelle, vorzugsweise in Form eines Bildschirms eines Infotainment-Systems, des Landfahrzeuges (1) ist.

6. Bildgebungssystem (20) für ein Landfahrzeug (1) zum Erhalten von Distanzinformationen mit
• einem ersten Strahler (21), der ausgeführt ist, Objekte (2) mit Strahlenpulsen (13) zu beleuchten,
• einem zweiten Strahler (22), der ausgeführt ist, die Objekte (2) mit Strahlenmustern (15) zu beleuchten,
• einem Bildgebungssensor (10), der ausgeführt ist, erste (11) und zweite Signale (12) zu erfassen, wobei
∘ die ersten Signale (11) an den mit den Strahlenpulsen (13) beleuchteten Objekten (2) reflektierte Strahlenpulse (13) und
∘ die zweiten Signale (12) an den mit den Strahlenmustern (15) beleuchteten Objekten (2) reflektierte Strahlenmuster (15) sind,
• einer Auswerteeinrichtung (30), die ausgeführt ist,
∘ in Abhängigkeit der ersten Signale (11) in einer ersten Distanzmessung eine erste Distanzinformation der Objekte (2) und
∘ in Abhängigkeit der zweiten Signale (12) in einer zweiten Distanzmessung eine zweite Distanzinformation der Objekte (2) zu erhalten und
∘ in Abhängigkeit eines Vergleichs der ersten und der zweiten Distanzinformation eine dritte Distanzinformation der Objekte (2) zu erhalten,
und
• einer Ausgabeschnittstelle (40), die ausgeführt ist, in Abhängigkeit der dritten Distanzinformation ein Bild dieser Objekte (2) bereitzustellen,
wobei das Bildgebungssystem (20) derart ausgeführt ist, dass es durch die erste und die zweite Distanzmessung bei Ausfall einer dieser Distanzmessungen funktional gesichert ist.

7. Bildgebungssystem (20) nach Anspruch 6, **dadurch gekennzeichnet, dass** das Bildgebungssystem (20) eine Optikeinrichtung (23) aufweist, die ausgeführt ist, an diesen Objekten (2) reflektierte Strahlen (13, 15) auf dem Bildgebungssensor (10) abzubilden.

8. Bildgebungssystem (20) nach Anspruch 7, **dadurch gekennzeichnet, dass** durch die erste und die zweite Distanzmessung, und/oder vorzugsweise durch einen Vergleich der ersten (11) und/oder der zweiten Signale (12) mit Farbbilddaten dieser Objekte (2), der Bildgebungssensor (10) und/oder die Optikeinrichtung (23) funktional abgesichert sind, wobei vorzugsweise eine Ausfallrate des Bildgebungssystems (20) kleiner als 100 Ausfälle pro 10⁹ Betriebsstunden des Bildgebungssystems (20) ist.

9. Bildgebungssystem (20) nach einem der Ansprüche 6 bis 8, **dadurch gekennzeichnet, dass** der Bildgebungssensor (10) ein Bildgebungssensor (10) nach Anspruch 2 oder 5 ist.

10. Verwendung eines Bildgebungssystems (20) nach einem der Ansprüche 6 bis 9 bei einem Umfelderfassungssystem (50), vorzugsweise einer Innenraumkamera (3), eines Landfahrzeuges (1).

11. Umfelderfassungssystem (50) für ein Landfahrzeug (1), wobei ein Bildgebungssensor (10) des Umfelderfassungssystems (50) ein Bildgebungssensor (10) nach einem der Ansprüche 1 bis 5 oder ein Bildgebungssystem (20) des Umfelderfassungssystems (50) ein Bildgebungssystem (20) nach einem der Ansprüche 6 bis 9 ist.

12. Umfelderfassungssystem (50) nach Anspruch 11, **dadurch gekennzeichnet, dass** das Umfelderfassungssystem (50) eine Innenraumkamera (3) ist.

13. Verfahren zur funktionalen Absicherung eines Umfelderfassungssystems (50) eines Landfahrzeuges (1) mit den folgenden Verfahrensschritten:
• Beleuchten von Objekten (2) mit Strahlenpulsen (13) und Erhalten von an den Objekten (2) reflektierten Strahlenpulsen (13) (V1),
• Beleuchten von Objekten (2) mit Strahlenmustern (15) und Erhalten von an den Objekten (2) reflektierten Strahlenmustern (15) (V2),
• in einer ersten Distanzmessung Messen von Laufzeiten der Strahlenpulse (13) und Erhalten einer ersten Distanzinformation dieser Objekte (2) in Abhängigkeit der Laufzeiten (V3),
• in einer zweiten Distanzmessung Messen von Reflexionsmustern der Strahlenmustern (15) und Erhalten einer zweiten Distanzinformation dieser Objekte (2) in Abhängigkeit der Reflexionsmuster (V4),
• Vergleichen der ersten und der zweiten Distanzinformation und in Abhängigkeit des Vergleichs Erhalten einer dritten Distanzinformation dieser Objekte (2) (V5) und
• in Abhängigkeit der dritten Distanzinformation Bereitstellen eines Bildes dieser Objekte (2) (V6),
wobei durch die erste und die zweite Distanzmessung bei Ausfall einer dieser Distanzmessungen das Umfelderfassungssystem (50) funktional gesichert ist.

14. Verfahren nach Anspruch 13, **dadurch gekennzeichnet, dass** Farbbilddaten dieser Objekte (2) erhalten werden (V7) und diese Farbbilddaten mit den an diesen Objekten (2) reflektierten Strahlen (13, 15) verglichen (V8) werden zur Erhöhung der funktionalen Sicherheit des Umfelderfassungssystems (50).

15. Verfahren nach Anspruch 13 oder 14, **dadurch gekennzeichnet, dass** zur Durchführung des Verfahrens ein Bildgebungssensor (10) nach einem der Ansprüche 1 bis 5 oder ein Bildgebungssystem (20) nach einem der Ansprüche 6 bis 9 verwendet wird.
